# EUROPÄISCHE PATENTANMELDUNG

(11) **EP 2 110 364 A2**
(43) Veröffentlichungstag der Anmeldung: **21.10.2009**
(21) Anmeldenummer: 09001797.1
(22) Anmeldetag: 10.02.2009
(51) Int. Cl.: C02F 1/66, C02F 1/42, C02F 1/28

(54) **Neutralisationsvorrichtung**

(30) Priorität: 16.04.2008 DE 102008019290
(71) Anmelder: Bomat Heiztechnik GmbH, 88662 Überlingen (DE)
(72) Erfinder: Bommer, Rolf, 88662 Überlingen (DE)
(74) Vertreter: Daub, Thomas

(57) **Zusammenfassung**

Die Erfindung geht aus von einer Neutralisationsvorrichtung, insbesondere zur Neutralisation von Kondensat (62) aus einem Heizgerät, umfassend mindestens ein Gehäuse (10a; 10b; 10c) mit einem Kondensateinlass (12a; 12b) und mit einem Kondensatauslass (14a; 14b; 14c).

Es wird vorgeschlagen, dass die Neutralisationsvorrichtung wenigstens einen Einsatzkorb (16a; 16b, 18b; 16c) aufweist, der zum lösbaren Einsatz in das Gehäuse (10a; 10b; 10c) und zur Aufnahme von Bestandteilen (20a; 20b, 22b) vorgesehen ist.

## Beschreibung

### Stand der Technik

Die Erfindung geht aus von einer Neutralisationsvorrichtung nach dem Oberbegriff des Anspruchs 1.

Aus der EP 1 886 721 A1 ist eine Neutralisationsvorrichtung zur Neutralisation von Kondensat aus einem Heizgerät bekannt, das ein Gehäuse mit einem Gehäuseboden, mit einem Kondensateinlass und mit einem Kondensatauslass aufweist. Ferner weist die Neutralisationsvorrichtung Trennwände auf, die verstellbar im Gehäuse lagerbar sind.

### Vorteile der Erfindung

Die Erfindung geht aus von einer Neutralisationsvorrichtung, insbesondere zur Neutralisation von Kondensat aus einem Heizgerät, umfassend mindestens ein Gehäuse mit einem Kondensateinlass und mit einem Kondensatauslass.

Es wird vorgeschlagen, dass die Neutralisationsvorrichtung wenigstens einen Einsatzkorb umfasst, der zum lösbaren Einsatz in das Gehäuse und zur Aufnahme von Bestandteilen vorgesehen ist. Unter einer "Neutralisation" soll dabei insbesondere eine pH-Wert-Verschiebung des Kondensats in Richtung "neutral" und/oder eine allgemeine Reinigung verstanden werden. Unter einem "Einsatzkorb" soll insbesondere ein Behältnis verstanden werden, in dem Bestandteile, wie insbesondere reaktive Bestandteile, die insbesondere einen schüttbaren und/oder fließbaren Zustand aufweisen, zusammengehalten werden können und gemeinsam mittels des Einsatzkorbs in das Gehäuse eingeführt und/oder aus dem Gehäuse entnommen werden können und der sich zumindest durch eine zumindest feste Wand gegenüber einem Netz unterscheidet. Dabei soll unter einer "festen Wand" insbesondere eine Wand verstanden werden, die im Gegensatz zu einem biegeweichen Netz auch zur Aufnahme von Biegekräften vorgesehen ist. Unter "zum lösbaren Einsatz vorgesehen" soll insbesondere verstanden werden, dass der Einsatzkorb nach einem Einsetzen auch wieder aus dem Gehäuse von einem Bediener entnommen werden kann, insbesondere ohne dass das Gehäuse und/oder ohne dass der Einsatzkorb zerstört wird. Ferner soll unter "vorgesehen" insbesondere speziell ausgestattet und/oder ausgelegt verstanden werden. Durch eine entsprechende Ausgestaltung kann eine vorteilhafte Wartung erreicht werden. Bestandteile, wie insbesondere reaktive Bestandteile können vorteilhaft, insbesondere komfortabel ohne Kontakt zwischen Bediener und Kondensat, gemeinsam mit dem Einsatzkorb aus dem Gehäuse entnommen werden. Die Bestandteile können außerhalb des Gehäuses gereinigt und/oder durch neue Bestandteile ersetzt werden. Anschließend kann der Einsatzkorb mit den gereinigten und/oder neuen Bestandteilen wieder in das Gehäuse eingesetzt werden.

Vorzugsweise ragt entweder der Einsatzkorb im montierten Zustand im Gehäuse über eine maximale Kondensatfüllstandshöhe bzw. eine Kondensatüberlaufhöhe hinaus und/oder es ist eine spezielle Einsatzgreifvorrichtung vorgesehen, mittels der der Einsatzkorb gegriffen werden kann, ohne dass ein Bediener mit dem Kondensat direkt in Kontakt kommt.

Der Einsatzkorb ist vorzugsweise dazu vorgesehen, reaktionsfähige Bestandteile aufzunehmen, wie insbesondere verschiedene, dem Fachmann als sinnvoll erscheinende Neutralisationsmittel, Ionisierungsmittel usw. Denkbar ist jedoch auch, dass der Einsatzkorb dazu vorgesehen ist, aus dem Kondensat abscheidende Bestandteile zu sammeln, um diese dann gemeinsam komfortabel aus dem Gehäuse entnehmen zu können.

In einer weiteren Ausgestaltung der Erfindung wird vorgeschlagen, dass der Einsatzkorb wenigstens eine Trennwand bildet. Dabei soll unter einer Trennwand insbesondere eine Wand verstanden werden, die eine gezielte Kondensatführung bewirkt, so dass insbesondere das Kondensat nur in einem bestimmten Bereich an der Trennwand vorbeiströmen kann und die insbesondere eine Trennwand des Gehäuses bildet, d.h. das Gehäuse in unterschiedliche Neutralisationsbereiche unterteilt. Durch eine entsprechende Ausgestaltung können zusätzliche Trennwände im Gehäuse eingespart und Kosten reduziert werden.

Weist der Einsatzkorb einen kondensatdurchlässigen Boden auf, kann der Boden des Einsatzkorbs vorteilhaft in einen Strömungsverlauf eingebunden werden. Vorzugsweise ist dabei der Boden siebartig ausgebildet.

In einer weiteren Ausgestaltung wird vorgeschlagen, dass die Neutralisationsvorrichtung eine Führungseinheit zur Führung des Einsatzkorbs bei einem Einsetzen in das Gehäuse und/oder bei einem Herausnehmen aus dem Gehäuse aufweist. Unter einer "Führungseinheit" soll dabei insbesondere eine Einheit verstanden werden, die den Einsatzkorb beim Einsetzen und/oder beim Herausnehmen auf einer definierten Bahn führt, wodurch eine Demontage und Montage vereinfacht werden können und insbesondere eine Fehlmontage durch eine Positionierung des Einsatzkorbs an einer falschen Stelle einfach vermieden werden kann.

Die Führungseinheit kann verschiedene, dem Fachmann als sinnvoll erscheinende Führungsmittel aufweisen, besonders vorteilhaft umfasst die Führungseinheit jedoch wenigstens eine Federnutverbindung, die konstruktiv einfach und robust ausgeführt werden kann.

Ist die Führungseinheit, d.h. insbesondere wenigstens ein Führungsmittel, zumindest teilweise einstückig an den Einsatzkorb und/oder an das Gehäuse angeformt, können zusätzliche Bauteile, Montageaufwand und Kosten eingespart werden.

Ferner wird vorgeschlagen, dass die Neutralisationsvorrichtung eine Fixiereinheit zur Sicherung des Einsatzkorbs im Gehäuse aufweist, und zwar insbesondere zur Sicherung des Einsatzkorbs entgegen einer vorgesehenen Auszugsrichtung, wodurch ein unerwünschtes Entfernen des Einsatzkorbs vermieden werden kann.

Die Fixiereinheit kann von verschiedenen, dem Fachmann als sinnvoll erscheinenden Einheiten gebildet werden, mittels derer eine Haltekraft erzielt werden kann. Besonders vorteilhaft weist die Fixiereinheit jedoch wenigstens eine Rastverbindung auf, wodurch konstruktiv einfach eine vorteilhafte Sicherung erreicht werden kann. Insbesondere kann mit einer Rastverbindung zusätzlich einem Bediener ein taktiles und/oder akustisches Signal übermittelt werden, dass der Einsatzkorb ordnungsgemäß positioniert ist. Die Rastverbindung kann in der Weise ausgeführt sein, dass ein gezieltes Lösen eines Rastmittels erforderlich ist und/oder kann überdrückbar ausgeführt sein, so dass zum Herausnehmen des Einsatzkorbs zu Beginn eine erhöhte Auszugskraft erforderlich ist.

In einer weiteren Ausgestaltung der Erfindung wird vorgeschlagen, dass die Neutralisationsvorrichtung wenigstens eine Abdichteinheit aufweist, die zur Abdichtung zwischen dem Gehäuse und dem Einsatzkorb vorgesehen ist, wodurch ein unerwünschter Kondensatstrom vermieden werden kann.

Die Abdichteinheit kann von verschiedenen, dem Fachmann als sinnvoll erscheinenden Einheiten gebildet sein, wie insbesondere von einer Labyrinthdichtung usw. Weist die Abdichteinheit wenigstens ein elastisches Dichtmittel auf, das insbesondere dazu vorgesehen ist, nach einer Auslenkung eine Normalkraft auf eine Dichtfläche zu bewirken, wie beispielsweise ein gummiartiges Dichtmittel und/oder ein Federmittel, das dazu vorgesehen ist, ein beweglich gelagertes Dichtmittel, wie insbesondere ein Keramikabdichtelement, zu belasten, kann einfach eine vorteilhafte Dichtwirkung erreicht werden.

Umfasst die Neutralisationsvorrichtung wenigstens zwei Einsatzkörbe, wobei das Gehäuse zumindest zwei Aufnahmebereiche zur Aufnahme der Einsatzkörbe aufweist, kann die Flexibilität der Neutralisationsvorrichtung erhöht werden, insbesondere können verschiedene Neutralisationsmittel bzw. Reinigungsmittel vorgehalten werden, und zwar insbesondere, wenn die Einsatzkörbe verschieden ausgebildet sind, d.h. insbesondere hinsichtlich ihres Aufnahmevolumens, ihres erforderlichen Bauraums usw.

Weist der Einsatzkorb wenigstens einen Kondensateinlass und einen Kondensatauslass auf, die in einer Einbaulage betrachtet in unterschiedlichen Höhen angeordnet sind, kann eine vorteilhafte Durchströmung des Einsatzkorbs erreicht werden.

In einer weiteren Ausgestaltung der Erfindung wird vorgeschlagen, dass der Einsatzkorb einen verstellbaren Aufnahmebereich, d.h. insbesondere hinsichtlich seines Aufnahmevolumens, aufweist, wodurch die Flexibilität weiter erhöht werden kann.

Der verstellbare Aufnahmebereich kann durch verschiedene Mittel erreicht werden, jedoch besonders vorteilhaft durch wenigstens eine in ihrer Position zu wenigstens einer Wand des Einsatzkorbs verstellbare Wand, wobei die verstellbare Wand von einem Boden des Einsatzkorbs und/oder einer Seitenwand des Einsatzkorbs gebildet sein kann.

Ferner wird vorgeschlagen, dass die Neutralisationsvorrichtung wenigstens eine Trennwand aufweist, welche getrennt von dem Einsatzkorb ausgebildet ist. Unter einer "Trennwand" soll in diesem Zusammenhang insbesondere eine Wand verstanden werden, welche zumindest teilweise zwischen wenigstens zwei Aufnahmebereichen der Neutralisationsvorrichtung angeordnet ist. Darunter, dass die Trennwand "getrennt" von dem Einsatzkorb ausgebildet ist, soll insbesondere verstanden werden, dass die Trennwand frei von Bauteilen ist, welche dem Einsatzkorb angehören. Hierdurch kann eine besonders zuverlässige Abgrenzung und insbesondere Abdichtung erreicht werden. Insbesondere kann eine besonders zuverlässige flüssigkeitsdichte Abtrennung der beiden Aufnahmebereiche gegeneinander erzielt werden.

Vorzugsweise weist die Neutralisationsvorrichtung wenigstens eine Abdichteinheit auf, welche zu einer Abdichtung zwischen der Trennwand und einem weiteren Bauteil vorgesehen ist. Darunter, dass die Abdichteinheit zu einer Abdichtung "zwischen" dem Bauteil und der Trennwand vorgesehen ist, soll insbesondere verstanden werden, dass die Abdichteinheit dazu vorgesehen ist, wenigstens einen Zwischenraum und/oder Spalt zwischen dem Bauteil und der Trennwand wenigstens teilweise flüssigkeitsdicht zu verschließen. Hierdurch kann eine effektive Funktionsweise erreicht werden. Insbesondere kann verhindert werden, dass Kondensat von einem ersten in einen letzten zu durchlaufenden Neutralisationsabschnitt fließt. Ferner kann insbesondere verhindert werden, dass ein ph-Wert in einem letzten zu durchlaufenden Neutralisationsabschnitt nachteilig verändert und insbesondere verkleinert wird.

Vorzugsweise weist die Neutralisationsvorrichtung wenigstens ein Barrieremittel auf, welches dazu vorgesehen ist, in wenigstens einem Neutralisationsabschnitt entstandene Rückstände aufzustauen. Hierdurch kann ein geringer Wartungsbedarf der Neutralisationsvorrichtung erreicht werden. Insbesondere kann ein Verstopfen, welches durch ein Abfließen der Rückstände entstehen kann, verhindert werden.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematisierte Ansicht einer Neutralisa-tionsvorrichtung von oben,
- Fig. 2: einen Schnitt entlang der Linie II-II in Figur 1,
- Fig. 2a: einen vergrößerten Ausschnitt einer Schnitt-darstellung einer alternativen Neutralisati-onsvorrichtung,
- Fig. 3: eine alternative Neutralisationsvorrichtung mit zwei Einsatzkörben,
- Fig. 4: eine dreidimensionale Ansicht eines Gehäuses, einer Trennwand und eines Einsatzkorbs einer alternativen Neutralisationsvorrichtung, wobei die Trennwand getrennt von dem Einsatzkorb ausgebildet ist,
- Fig. 4a: eine Ansicht der Anordnung von Fig. 4, wobei ein Barrieremittel eingefügt ist,
- Fig. 4b: eine Ansicht eines Neutralisationsabschnitts der Neutralisationsvorrichtung von oben,
- Fig. 4c: einen IVc-IVc-Schnitt durch die Neutralisationsvorrichtung,
- Fig. 5: eine Explosionsdarstellung des Gehäuses, der Trennwand, des Einsaztkorbs und eines Deckels der alternativen Neutralisationsvorrichtung,
- Fig. 6: eine dreidimensionale Ansicht der alternativen Neutralisationsvorrichtung in einem vollständig zusammengebauten Zustand und
- Fig. 7: eine Ansicht eines Neutralisationsabschnitts einer weiteren alternativen Neutralisationsvorrichtung von oben, wobei Wände der Neutralisationsvorrichtung schlitzlos ausgebildet sind,
- Fig. 8: einen VIII-VIII-Schnitt durch die alternative Neutralisationsvorrichtung und
- Fig. 9: eine Ansicht eines Schlitze aufweisenden Barrieremittels der alternativen Neutralisationsvorrichtung.

### Beschreibung der Ausführungsbeispiele

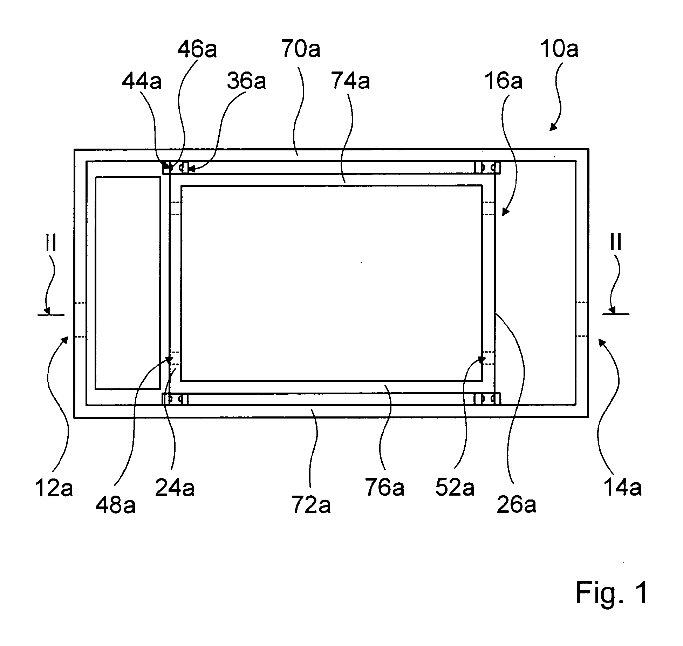

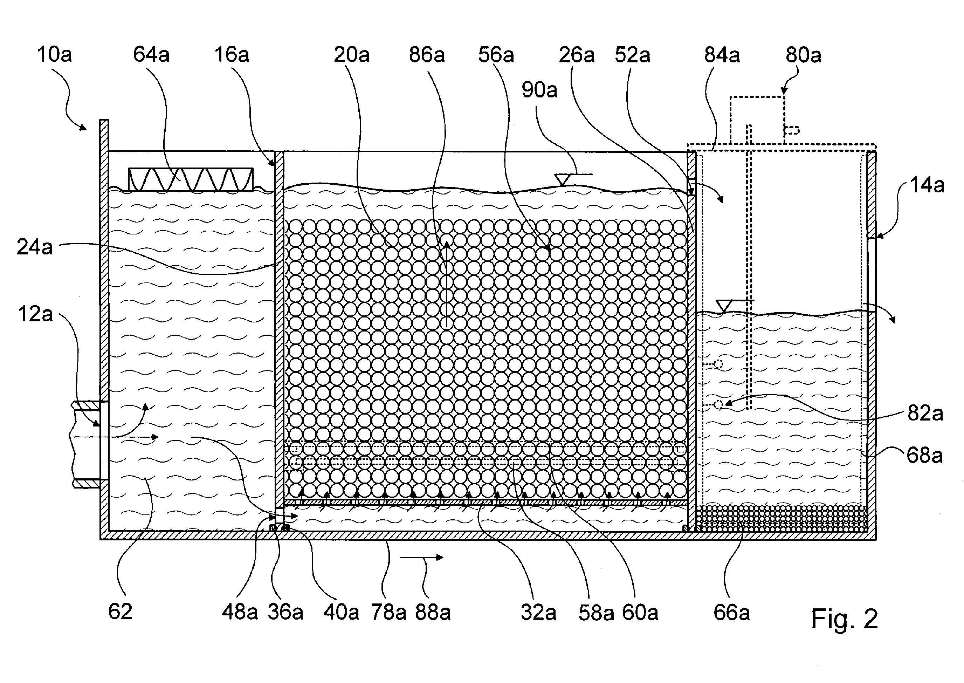

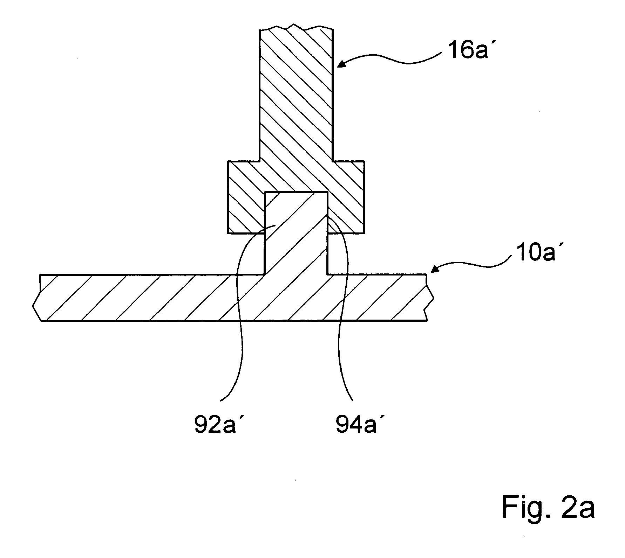

Figur 1 zeigt eine schematisierte Ansicht einer Neutralisationsvorrichtung von oben zur Neutralisation von Kondensat 62 aus einem Heizgerät, umfassend ein Gehäuse 10a mit einem Kondensateinlass 12a und einem Kondensatauslass 14a. Die Neutralisationsvorrichtung umfasst einen Einsatzkorb 16a, der zum lösbaren Einsatz in das Gehäuse 10a und zur Aufnahme von reaktiven, ein Neutralisationsmittel bildenden Bestandteilen 20a vorgesehen ist. Der Einsatzkorb 16a ist in einem im Gehäuse 10a eingesetzten Zustand in einer Einbaulage dargestellt und kann von einem Bediener gemeinsam mit den Bestandteilen 20a aus dem Gehäuse 10a entnommen werden (Figur 2). Der Einsatzkorb 16a bildet in einer Hauptströmungsrichtung 88a des Kondensateinlasses 12a in Richtung des Kondensatauslasses 14a des Kondensats 62 eine erste Trennwand 24a und eine zweite Trennwand 26a, die das Gehäuse 10a in verschiedene Neutralisationsabschnitte unterteilt. Das Gehäuse 10a weist keine Trennwände auf bzw. ist trennwandfrei ausgebildet. In einem ersten Neutralisationsabschnitt ist ein Auffangelement 64a für unverbrannte Kohlenwasserstoffe angeordnet, durch welches die Kohlenwasserstoffe aufgenommen und/oder mit Hilfe von Bakterien abgebaut werden. Mittels der ersten Trennwand 24a wird das Kondensat 62 von dem ersten Neutralisationsabschnitt in einem Bodenbereich desselben durch einen Kondensateinlass 48a des Einsatzkorbs 16a in einen zweiten Neutralisationsabschnitt geleitet. Der Einsatzkorb 16a weist einen kondensatdurchlässigen, siebartigen Boden 32a auf, durch den das Kondensat 62 in einen Aufnahmebereich 56a des Einsatzkorbs 16a geführt wird, in dem die Bestandteile 20a angeordnet sind. Der Boden 32a ist gegenüber Unterkanten der Trennwände 24a, 26a, mittels denen der Einsatzkorb 16a auf einem Boden 78a des Gehäuses 10a aufgeständert ist, in einer Einbaulage betrachtet nach oben versetzt angeordnet, so dass der Boden 32a des Einsatzkorbs 16a einen Abstand zu dem Boden 78a des Gehäuses 10a aufweist und das Kondensat 62 vorteilhaft großflächig durch den Boden 32a des Einsatzkorbs 16a strömen kann. Anstatt, dass eine Nut an das Gehäuse 10a in dessen Bodenbereich angeformt ist, könnte auch an ein Gehäuse 10a' im Bodenbereich ein Steg 92a' angeformt sein, der im montierten Zustand in eine an einen Einsatzkorb 16a' angeformte Nut 94a' eingreift. Ein unerwünschtes Verschmutzen der am Bodenbereich angeordneten Nut des Gehäuses 10a' könnte vermieden werden und es könnte eine einfach zu reinigende Nut 94a' am Einsatzkorb 16a' erzielt werden (vgl. Figur 2a).

Um einen verstellbaren Aufnahmebereich 56a hinsichtlich des Aufnahmevolumens zu erreichen, kann der Einsatzkorb 16a mit einer in ihrer Position zu den Trennwänden 24a, 26a verstellbaren Wand 58a, 60a bzw. mit einem verstellbaren Boden ausgeführt sein, wie dies in Figur 2 gestrichelt angedeutet ist. Alternativ und/oder zusätzlich können auch eine oder mehrere Seitenwände des Einsatzkorbs 16a, wie insbesondere auch die Trennwände 24a, 26a, verstellbar ausgeführt sein, um einen Aufnahmebereich 56a hinsichtlich seines Aufnahmevolumens zu verstellen. Dies kann vorteilhaft erreicht werden, wenn die Seitenwände und der Boden 32a des Einsatzkorbs 16a durch lösbare Steckverbindungen verbunden sind.

Das Kondensat 62 wird durch die Bestandteile 20a zu einem Kondensatauslass 52a des Einsatzkorbs 16a geführt. Der Kondensateinlass 48a und der Kondensatauslass 52a des Einsatzkorbs 16a sind in unterschiedlichen Höhen angeordnet, um eine vorteilhafte Durchströmung des Aufnahmebereichs 56a, und zwar von unten nach oben, zu erreichen. Ferner wird durch einen Niveauunterschied des Kondensateinlasses 12a und des Kondensatauslasses 52a ein Sifon erreicht, wodurch ein unerwünschter Gasaustritt von einem Heizkessel über eine Kondensatleitung vermieden wird.

Das Kondensat 62 strömt über den Kondensatauslass 52a in einen dritten Neutralisationsbereich, der zur Ablagerung von Absetzprodukten 66a vorgesehen ist. Die Absetzprodukte 66a werden insbesondere bei der Neutralisation des Kondensats 62 gebildet. Zur Aufnahme der Absetzprodukte 66a könnte ein weiterer Einsatzkorb 68a vorgesehen sein, mittels dem die Absetzprodukte 66a gemeinsam aus dem Gehäuse 10a entnommen werden könnten, ohne dass ein Bediener mit dem Kondensat 62 oder den Absetzprodukten 66a direkt in Kontakt kommt, wie dies in Figur 2 gestrichelt angedeutet ist. Aus dem dritten Neutralisationsbereich fließt das Kondensat 62 über den Kondensatauslass 14a ab. Der Kondensatauslass 14a könnte grundsätzlich in verschiedenen Höhen angeordnet sein, jedoch nicht höher als der Kondensatauslass 52a.

Ferner ist denkbar, eine Pumpe 80a zum Abpumpen des gereinigten Kondensats 62 vorzusehen, wodurch gezielt das Kondensat 62 in bestimmten Bereichen abgenommen werden kann, wie dies in Figur 2 gestrichelt dargestellt ist. Hierbei wird vorzugsweise eine Niveauregelungseinheit 82a vorgesehen. Die Pumpe 80a kann vorteilhaft an einem Deckel 84a angeordnet sein.

Müssen die Bestandteile 20a ausgetauscht oder gereinigt werden, kann ein Bediener die Bestandteile 20a gemeinsam mittels des Einsatzkorbs 16a komfortabel aus dem Gehäuse 10a entnehmen, ohne mit dem Kondensat 62 in Kontakt zu kommen. Der Einsatzkorb 16a ragt hierfür über eine maximale Kondensatfüllstandshöhe 90a bzw. über eine durch den Kondensatauslass 52a bestimmte Kondensatüberlaufhöhe hinaus und bildet oberhalb des Kondensatauslasses 52a eine Haltevorrichtung zum Herausnehmen aus dem Gehäuse 10a.

Die Neutralisationsvorrichtung weist eine Führungseinheit 36a zur Führung des Einsatzkorbs 16a bei einem Einsetzen in das Gehäuse 10a und bei einem Herausnehmen aus dem Gehäuse 10a auf. Die Führungseinheit 36a weist an Seitenwänden 70a, 72a des Gehäuses 10a und Seitenwänden 74a, 76a des Einsatzkorbs 16a sowie an dem Boden 78a des Gehäuses 10a Federnutverbindungen auf, die zu einem Teil an den Einsatzkorb 16a und zum anderen Teil an das Gehäuse 10a einstückig angeformt sind. Im Bodenbereich des Gehäuses 10a sind die Trennwände 24a, 26a jeweils zwischen zwei an das Gehäuse 10a angeformte Stege bzw. in dadurch gebildete Nuten eingesteckt.

Um einem Bediener eine korrekte Positionierung des Einsatzkorbs 16a in dem Gehäuse 10a zu signalisieren und ein unerwünschtes Lösen des Einsatzkorbs 16a entgegen einer senkrecht zum Boden 32a des Einsatzkorbs 16a verlaufenden Auszugsrichtung 86a aus dem Gehäuse 10a zu vermeiden, weist die Neutralisationsvorrichtung eine eine Rastverbindung aufweisende Fixiereinheit 40a auf, die im Bodenbereich in die Führungseinheit 36a, d.h. in die Federnutverbindungen, integriert ist.

Ferner umfasst die Neutralisationsvorrichtung eine Abdichteinheit 44a, die zur Abdichtung zwischen dem Gehäuse 10a und dem Einsatzkorb 16a vorgesehen ist und die ebenfalls in die Führungseinheit 36a, d.h. in die Federnutverbindungen, integriert ist. Die Abdichteinheit 44a weist elastische Dichtmittel 46a auf, die beim Herstellen der Federnutverbindungen elastisch verformt werden und damit eine Normalkraft auf Dichtflächen bewirken.

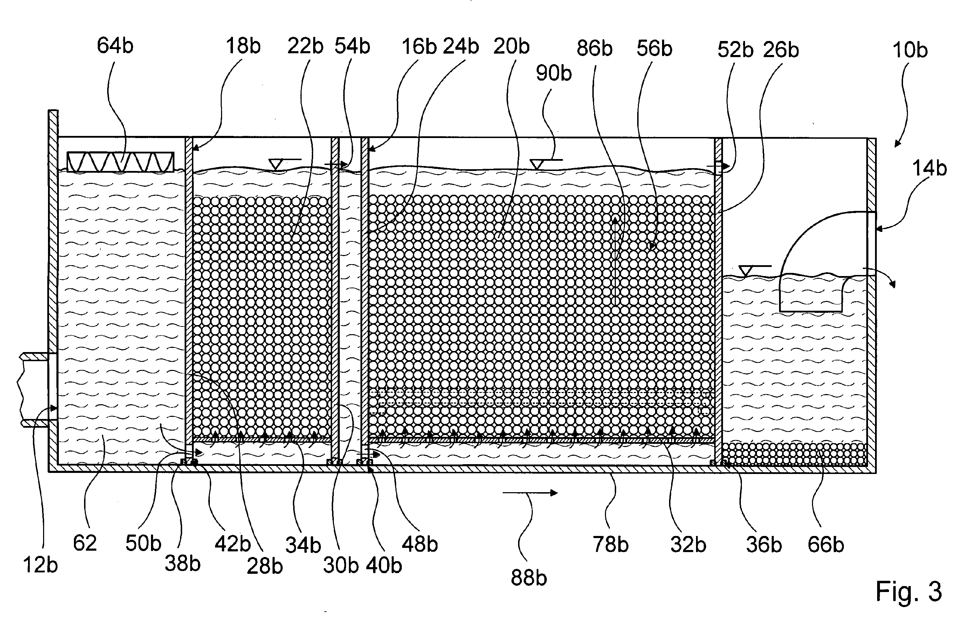

In den Figuren 3 bis 6 ist ein alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Figuren 1 bis 6 die Buchstaben a bzw. b usw. hinzugefügt. Die nachfolgende Beschreibung beschränkt sich im Wesentlichen auf die Unterschiede zu dem Ausführungsbeispiel in den Figuren 1 und 2, wobei bezüglich gleich bleibender Bauteile, Merkmale und Funktionen auf die Beschreibung des Ausführungsbeispiels in den Figuren 1 und 2 verwiesen werden kann.

Figur 3 zeigt eine alternative Neutralisationsvorrichtung mit zwei verschiedenen, in einer Hauptströmungsrichtung 88b eines Kondensats 62 hintereinander angeordneten Einsatzkörben 16b, 18b. In dem Einsatzkorb 16b sind reaktive Bestandteile 20b angeordnet, die den Bestandteilen 20a des Ausführungsbeispiels in den Figuren 1 und 2 entsprechen, während in dem Einsatzkorb 18b, der ebenfalls einen Kondensateinlass 50b und einen Kondensatauslass 54b aufweist, andersartige reaktive Bestandteile 22b, wie Aktivkohleelemente oder auch Ionentauscher, angeordnet sind. Der Einsatzkorb 18b bildet ebenfalls Trennwände 28b, 30b innerhalb des Gehäuses 10b, weist einen kondensatdurchlässigen Boden 34b auf und ist mittels einer Führungseinheit 38b innerhalb des Gehäuses 10b geführt, ist mit einer nicht näher dargestellten Abdichteinheit gegenüber dem Gehäuse 10b abgedichtet und mittels einer Fixiereinheit 42b im Gehäuse 10b gesichert.

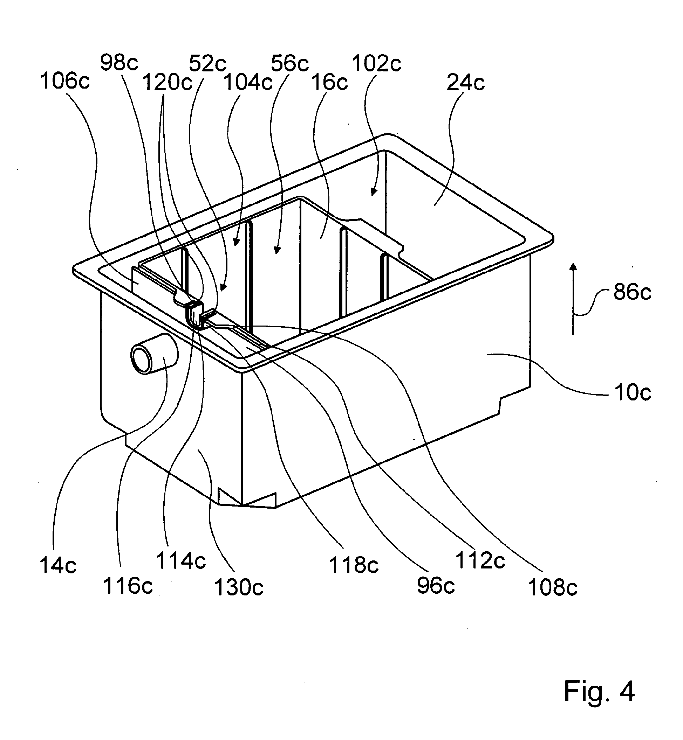

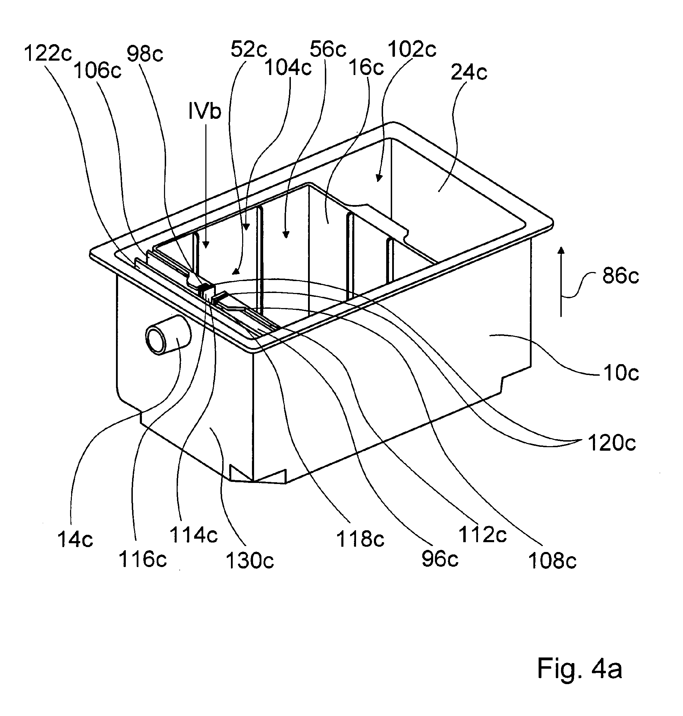

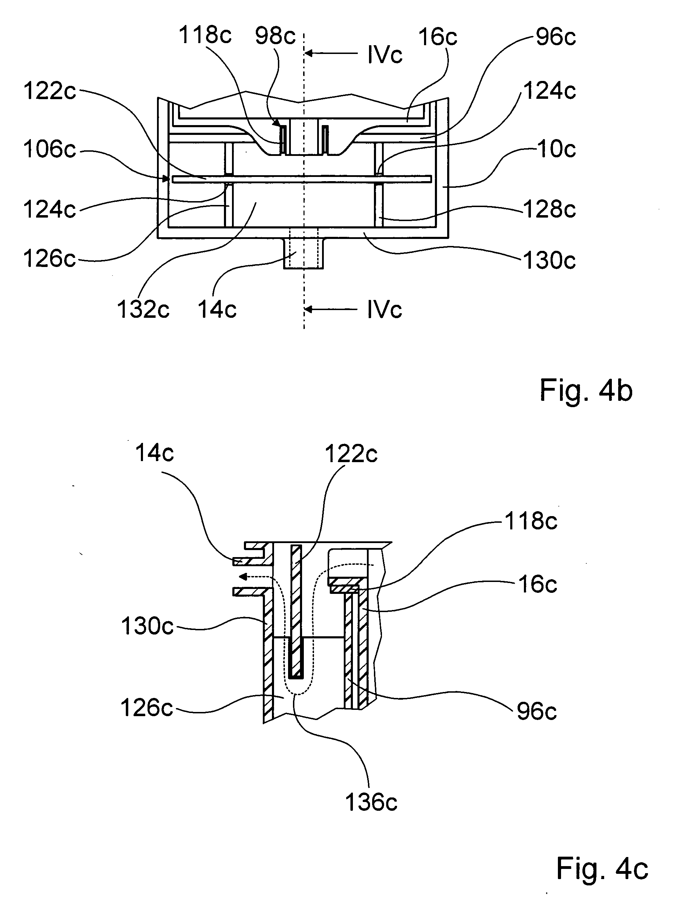

Figur 4 zeigt ein Gehäuse 10c, eine Trennwand 96c und einen Einsatzkorb 16c einer alternativen Neutralisationsvorrichtung, welche drei Neutralisationsabschnitte 102c, 104c, 106c aufweist. Zusammen mit dem Gehäuse 10c bildet die Trennwand 96c den Neutralisationsabschnitt 106c, welcher unmittelbar neben einem Kondensatauslass 14c der Neutralisationsvorrichtung angeordnet ist. Die Trennwand 96c ist einstückig mit dem Gehäuse 10c und getrennt von dem Einsatzkorb 16c ausgebildet und trennt den Neutralisationsabschnitte 106c von dem Neutralisationsabschnitte 104c ab. Der Einsatzkorb 16c ist zu einem Großteil in dem Neutralisationsabschnitt 104c angeordnet und bildet einen Aufnahmebereich 56c, durch welchen bei einem Betriebsvorgang Kondensat fließt. In Figur 4 ist der Einsatzkorb 16c in einer Anordnung dargestellt, welche er bei einem Betrieb der Neutralisationsvorrichtung einnimmt. Eine Wand 108c des Einsatzkorbs 16c weist an ihrem oberen Ende einen Kondensatauslass 54c auf, der von einer Ausnehmung gebildet ist.

Der Einsatzkorb 16c weist einen Fortsatz 116c auf, der als Rinne ausgebildet ist, welche in einem Betriebszustand der Neutralisationsvorrichtung an einer Oberseite eine nutförmige Vertiefung 114c aufweist, durch welche bei einem Betrieb der Neutralisationsvorrichtung Kondensat von dem Aufnahmebereich 56c in den Neutralisationsabschnitt 106c fließt. Die Rinne und damit die Vertiefung 114c mündet in den Kondensatauslass 54c. Der Fortsatz 116c ragt in dem Betriebszustand in den Neutralisationsabschnitt 106c.

Außerdem weist die Neutralisationsvorrichtung eine Abdichteinheit 98c auf, welche an dem Einsatzkorb 16c befestigt ist und einen Zwischenraum 112c zwischen einem Bauteil 134c, nämlich dem Fortsatz 116c, und der Trennwand 96c abdichtet. Ein elastisches Dichtmittel 118c der Abdichteinheit 98c, welches in einem unmontierten Zustand eine längliche Quaderform aufweist, ist in zwei durch den Einsatzkorb 16c gebildete Spalte 120c eingeklemmt und liegt in dem Betriebszustand an einer Unterseite des Fortsatzes 116c, der als Rinne ausgebildet ist, an.

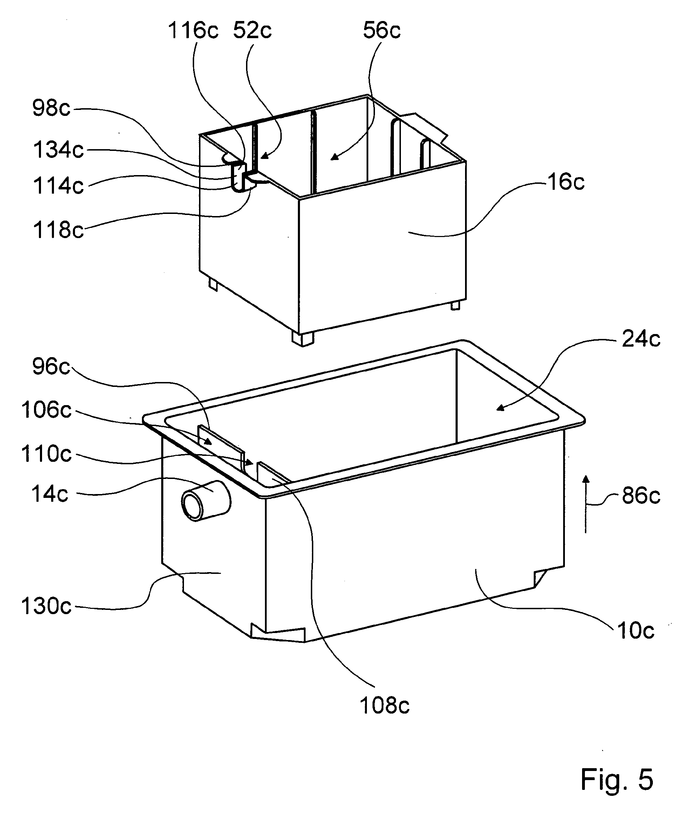

Das Dichtmittel 118c liegt in dem Betriebszustand auf einem Rand der Trennwand 96c auf und ragt in den Neutralisationsabschnitt 106c. Dieser Rand der Trennwand 96c berandet eine Ausnehmung 110c der Trennwand 96c (Figur 5), die bei einem Betrieb der Neutralisationsvorrichtung an einem oberen Ende der Trennwand 96c angeordnet ist. Das Dichtmittel 118c liegt in dem Betriebszustand an der Trennwand 96c derart an, dass bei einem Betrieb der Neutralisationsvorrichtung ein Fließen von Kondensat aus dem Neutralisationsabschnitt 106c zwischen dem Dichtmittel 118c und dem Fortsatz 116c hindurch in den Zwischenraum 112c und umgekehrt verhindert wird.

Die Trennwand 96c dichtet die Neutralisationsabschnitte 106c und 104c gegeneinander ab. In einem Betriebszustand der Neutralisationsvorrichtung kann eine Kondensatfüllstandshöhe bis zu einer Unterseite des Fortsatzes 116c reichen, um zu gewährleisten, dass ein Fließen von Kondensat aus dem Neutralisationsabschnitt 106c in den Aufnahmebereich 56c verhindert ist. Der Neutralisationsabschnitt 106c fängt bei einem Betrieb der Neutralisationsvorrichtung schwere Neutralisationsrückstände, wie z.B. Salze, auf.

Bei einem Betrieb der Neutralisationsvorrichtung sind in dem Einsatzkorb 16c reaktive Bestandteile angeordnet, welche eine Verschiebung eines ph-Werts von durch den Einsatzkorb 16c fließendem Kondensat in Richtung eines neutralen ph-Werts bewirken. Die Bestandteile sind aus Kalkstein gebildet. Prinzipiell können die Bestandteile auch aus Magnesiumoxid oder chlorhaltigen Stoffen gebildet sein. Bei dem Betrieb der Neutralisationsvorrichtung bildet sich in dem Neutralisationsabschnitt 104c eine oben schwimmende Schicht, welche aus Schlacke gebildet ist und zumindest teilweise aus Salzen bestehen kann und in den Neutralisationsabschnitt 106c überlaufen kann, wo sich die Salze an einem Boden des Neutralisationsabschnitts 106c absetzen.

Des Weiteren weist die Neutralisationsvorrichtung ein Barrieremittel 122c auf, welches dazu vorgesehen ist, bei einem Betrieb der Neutralisationsvorrichtung ein Fließen der Schlacke in den Kondensatauslass 14c zu verhindern (Figuren 4a, 4b und 4c). Das Barrieremittel 122c ist als einsteckbare Wand ausgebildet und in einem Betriebszustand in Schlitze 124c zweier Wände des Gehäuses 10c eingesteckt. Die Wände 126c, 128c sind an die Trennwand 96c und eine Wand 130c des Gehäuses 10c angeformt, welche den Kondensatauslass 14c aufweist. Ferner teilen die Wände 126c, 128c den Neutralisationsabschnitt 106c in drei Teile ein. Die Schlitze 124c sind mittig in den Wänden 126c, 128c zwischen der Trennwand 96c und der Wand 130c angeordnet und außerdem beabstandet von einem Boden 132c des Gehäuses 10c, so dass das Barrieremittel 122c in einem eingesteckten Zustand von dem Boden 132c beabstandet ist. In dem Betriebszustand weist das Barrieremittel 122c, die Trennwand 96c und der Einsatzkorb 16c eine im Wesentlichen gleiche Höhe auf. Ferner ist das Barrieremittel 122c zwischen dem als Rinne ausgebildeten Fortsatz 116c und dem Kondensatauslass 14c angeordnet. Dies bedeutet, dass eine fiktive Gerade, welche einen beliebigen Punkt des Fortsatzes 116c und einen beliebigen Punkt des Kondensatauslass 14c aufweist, immer das Barrieremittel 122c schneidet.

Bei einem Betrieb der Neutralisationsvorrichtung gelangt Kondensat auf einem Fließweg 136c von dem Neutralisationsabschnitt 104c zu dem Kondensatauslass 14c. Dabei fließt das Kondensat, das von dem Neutralisationsabschnitt 104c in den Neutralisationsabschnitt 106c fließt, unter dem Barrieremittel 122c hindurch bis es zu dem Kondensatauslass 14c gelangt und durch diesen abfließen kann. Schlacke, welche dabei ebenfalls von dem Neutralisationsabschnitt 104c in den Neutralisationsabschnitt 106c fließt, wird dabei durch das Barrieremittel 122c daran gehindert, durch den Kondensatauslass 14c abzufließen. Dies erfolgt deshalb, weil die Schlacke auf dem Kondensat schwimmt und somit ein Fließen der Schlacke unterhalb des Barrieremittels 122c verhindert ist, weil bei einem Betrieb der Neutralisationsvorrichtung eine Füllstandshöhe des Kondensats in dem Neutralisationsabschnitt 106c mindestens bis zu einer Unterkante des Barrieremittels 122c reicht.

Bei dem Betrieb der Neutralisationsvorrichtung setzt sich Ruß und Asche an einem Boden des Neutralisationsabschnitts 102c ab.

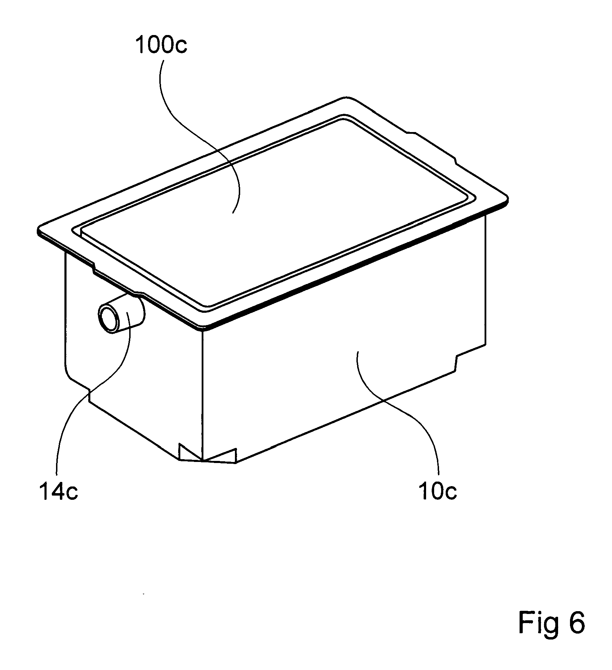

Des Weiteren weist die Neutralisationsvorrichtung einen Deckel 100c auf (Figur 6), welcher frei ist von Kondensatleitungsanschlüssen, wodurch eine einfache Demontage insbesondere des Deckels 100c erreicht werden kann und insbesondere bei einer Wartung der Neutralisationsvorrichtung, bei welcher der Einsatzkorb 16c entnommen wird, eine Demontage eines Kondensatleitungsanschlusses vermieden werden kann.

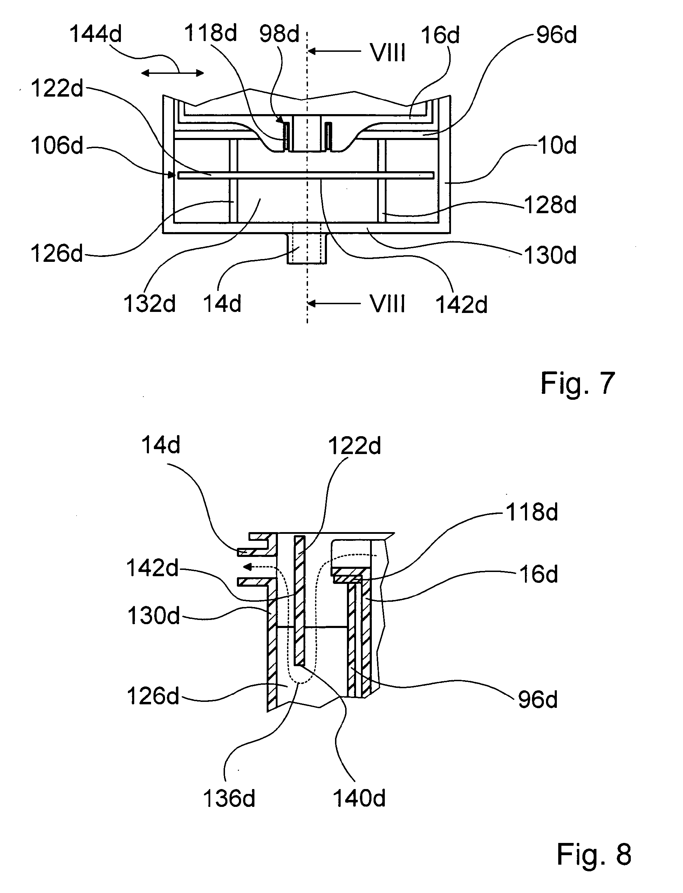

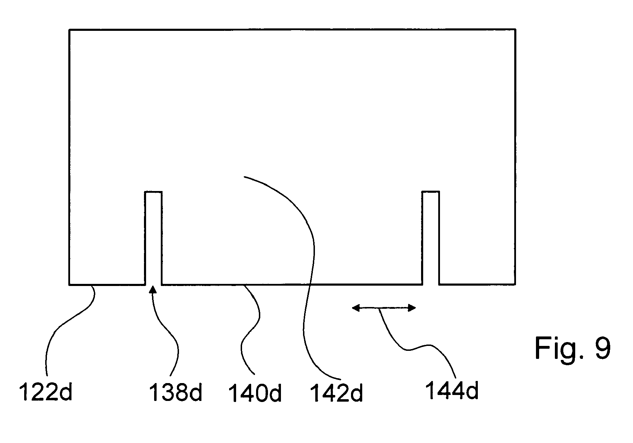

In den Figuren 7 bis 9 ist ein alternatives Ausführungsbeispiel einer Neutralisationsvorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen des Ausführungsbeispiels in den Figuren 7 bis 9 der Buchstaben d hinzugefügt. Die nachfolgende Beschreibung beschränkt sich im Wesentlichen auf die Unterschiede zu dem Ausführungsbeispiel in den Figuren 4 bis 6, wobei bezüglich gleich bleibender Bauteile, Merkmale und Funktionen auf die Beschreibung des Ausführungsbeispiels in den Figuren 4 bis 6 verwiesen werden kann.

Die in den Figuren 7 bis 9 dargestellte Neutralisationsvorrichtung weist schlitzlos ausgebildete Wände 126d, 128d auf. Ein Barrieremittel 122d der Neutralisationsvorrichtung weist Schlitze 138d auf. In einem Betriebszustand (Figuren 7 und 8) erstrecken sich die Schlitze 138d ausgehend von einer Unterseite 140d des Barrieremittels 122d in vertikaler Richtung nach oben. In dem Betriebszustand sind die Wände 126d, 128d in den Schlitzen 138d angeordnet. Hierdurch ist das Barrieremittel 122d bezüglich einer Längsrichtung 144d formschlüssig an den Wänden 126d, 128 befestigt. Eine Seite 142d des Barrieremittels 122d ist einem Kondensatauslass 14d der Neutralisationsvorrichtung zugewandt.

### Bezugszeichen

- 10: Gehäuse
- 12: Kondensateinlass
- 14: Kondensatauslass
- 16: Einsatzkorb
- 18: Einsatzkorb
- 20: Bestandteil
- 22: Bestandteil
- 24: Trennwand
- 26: Trennwand
- 28: Trennwand
- 30: Trennwand
- 32: Boden
- 34: Boden
- 36: Führungseinheit
- 38: Führungseinheit
- 40: Fixiereinheit
- 42: Fixiereinheit
- 44: Abdichteinheit
- 46: Dichtmittel
- 48: Kondensateinlass
- 50: Kondensateinlass
- 52: Kondensatauslass
- 54: Kondensatauslass
- 56: Aufnahmebereich
- 58: Wand
- 60: Wand

- 62: Kondensat
- 64: Auffangelement
- 66: Absetzprodukt
- 68: Einsatzkorb
- 70: Seitenwand
- 72: Seitenwand
- 74: Seitenwand
- 76: Seitenwand
- 78: Boden
- 80: Pumpe
- 82: Niveauregelungseinheit
- 84: Deckel
- 86: Auszugsrichtung
- 88: Hauptströmungsrichtung
- 90: Kondensatfüllstandshöhe
- 92: Steg
- 94: Nut
- 96: Trennwand
- 98: Abdichteinheit
- 100: Deckel
- 102: Neutralisationsabschnitt
- 104: Neutralisationsabschnitt
- 106: Neutralisationsabschnitt
- 108: Wand
- 110: Ausnehmung
- 112: Zwischenraum
- 114: Vertiefung
- 116: Fortsatz
- 118: Dichtmittel
- 120: Spalt
- 122: Barrieremittel
- 124: Schlitz
- 126: Wand

- 128: Wand
- 130: Wand
- 132: Boden
- 134: Bauteil
- 136: Fließweg
- 138: Schlitz
- 140: Unterseite
- 142: Seite
- 144: Längsrichtung

## Patentansprüche

1. Neutralisationsvorrichtung, insbesondere zur Neutralisation von Kondensat (62) aus einem Heizgerät, umfassend mindestens ein Gehäuse (10a; 10b; 10c) mit einem Kondensateinlass (12a; 12b) und mit einem Kondensatauslass (14a; 14b; 14c),
**gekennzeichnet durch**
wenigstens einen Einsatzkorb (16a; 16b, 18b; 16c), der zum lösbaren Einsatz in das Gehäuse (10a; 10b; 10c) und zur Aufnahme von Bestandteilen (20a; 20b, 22b) vorgesehen ist.

2. Neutralisationsvorrichtung nach Anspruch 1,
**dadurch gekennzeichnet,**
**dass** der Einsatzkorb (16a; 16b, 18b; 16c) dazu vorgesehen ist, reaktionsfähige Bestandteile (20a; 20b, 22b) aufzunehmen.

3. Neutralisationsvorrichtung nach Anspruch 1 oder 2,
**dadurch gekennzeichnet,**
**dass** der Einsatzkorb (16a; 16b, 18b; 16c) wenigstens eine Trennwand (24a, 26a; 24b, 26b, 28b, 30b; 24c) bildet.

4. Neutralisationsvorrichtung nach einem der vorhergehenden Ansprüche,
**dadurch gekennzeichnet,**
**dass** der Einsatzkorb (16a; 16b, 18b; 16c) einen kondensatdurchlässigen Boden (32a; 32b, 34b) aufweist.

5. Neutralisationsvorrichtung nach einem der vorhergehenden Ansprüche,
**gekennzeichnet durch**
eine Führungseinheit (36a; 36b, 38b) zur Führung des Einsatzkorbs (16a; 16b, 18b) bei einem Einsetzen in das Gehäuse (10a; 10b) und/oder bei einem Herausnehmen aus dem Gehäuse (10a; 10b).

6. Neutralisationsvorrichtung nach Anspruch 5,
**dadurch gekennzeichnet,**
**dass** die Führungseinheit (36a; 36b, 38b) wenigstens eine Federnutverbindung aufweist.

7. Neutralisationsvorrichtung nach Anspruch 5 oder 6,
**dadurch gekennzeichnet,**
**dass** die Führungseinheit (36a; 36b, 38b) zumindest teilweise einstückig an den Einsatzkorb (16a; 16b, 18b) und/oder an das Gehäuse (10a; 10b) angeformt ist.

8. Neutralisationsvorrichtung nach einem der vorhergehenden Ansprüche,
**gekennzeichnet durch**
eine Fixiereinheit (40a; 40b, 42b) zur Sicherung des Einsatzkorbs (16a; 16b, 18b; 16c) im Gehäuse (10a; 10b; 10c).

9. Neutralisationsvorrichtung nach Anspruch 8,
**dadurch gekennzeichnet,**
**dass** die Fixiereinheit (40a; 40b, 42b) wenigstens eine Rastverbindung aufweist.

10. Neutralisationsvorrichtung nach einem der vorhergehenden Ansprüche,
**gekennzeichnet durch**
wenigstens eine Abdichteinheit (44a), die zur Abdichtung zwischen dem Gehäuse (10a; 10b) und dem Einsatzkorb (16a; 16b, 18b) vorgesehen ist.

11. Neutralisationsvorrichtung nach Anspruch 10,
**dadurch gekennzeichnet,**
**dass** die Abdichteinheit (44a) wenigstens ein elastisches Dichtmittel (46a; 46b) aufweist.

12. Neutralisationsvorrichtung nach einem der vorhergehenden Ansprüche,
**gekennzeichnet durch**
wenigstens zwei Einsatzkörbe (16a, 68a; 16b, 18b), wobei das Gehäuse (10a; 10b) zumindest zwei Aufnahmebereiche zur Aufnahme der Einsatzkörbe (16a, 68a; 16b, 18b) aufweist.

13. Neutralisationsvorrichtung nach Anspruch 12,
**dadurch gekennzeichnet,**
**dass** die Einsatzkörbe (16a, 68a; 16b, 18b) verschieden ausgebildet sind.

14. Neutralisationsvorrichtung nach einem der vorhergehenden Ansprüche,
**dadurch gekennzeichnet,**
**dass** der Einsatzkorb (16a; 16b, 18b; 16c) wenigstens einen Kondensateinlass (48a; 48b, 50b) und einen Kondensatauslass (52a; 52b, 54b) aufweist, die in einer Einbaulage betrachtet in unterschiedlichen Höhen angeordnet sind.

15. Neutralisationsvorrichtung nach einem der vorhergehenden Ansprüche,
**dadurch gekennzeichnet,**
**dass** der Einsatzkorb (16a) einen verstellbaren Aufnahmebereich (56a) aufweist.

16. Neutralisationsvorrichtung nach Anspruch 15,
**dadurch gekennzeichnet,**
**dass** der Einsatzkorb (16a) wenigstens eine in ihrer Position zu wenigstens einer Wand (24a, 26a) des Einsatzkorbs (16a) verstellbare Wand (58a, 60a) aufweist.

17. Einsatzkorb für eine Neutralisationsvorrichtung nach einem der vorhergehenden Ansprüche.

18. Einsatzkorb nach Anspruch 17,
**gekennzeichnet durch**
einen einstellbaren Aufnahmebereich (56a).

19. Einsatzkorb nach Anspruch 18,
**gekennzeichnet durch**
wenigstens eine in ihrer Position zu wenigstens einer Wand (24a, 26a) des Einsatzkorbs (16a) verstellbare Wand (58a, 60a).

20. Neutralisationsvorrichtung nach einem der Ansprüche 1 bis 16,
**gekennzeichnet durch**
wenigstens eine Trennwand (96c), welche getrennt von dem Einsatzkorb (16c) ausgebildet ist.

21. Neutralisationsvorrichtung nach Anspruch 20,
**gekennzeichnet durch**
wenigstens eine Abdichteinheit (98c), welche zu einer Abdichtung zwischen der Trennwand (96c) und einem weiteren Bauteil (134c) vorgesehen ist.
